# EUROPEAN PATENT APPLICATION

(11) **EP 4 825 882 A1**
(43) Date of publication of application: **21.10.2026**
(21) Application number: 25748333.9
(22) Date of filing: 16.01.2025
(51) Int. Cl.: C08F 2/32

(54) **METHOD FOR PRODUCING WATER ABSORBENT RESIN PARTICLES**

(30) Priority: 29.01.2024 JP 2024010907
(71) Applicant: Sumitomo Seika Chemicals Co., Ltd., Kako-gun, Hyogo 675-0145 (JP)
(72) Inventor: CHIBA, Mikito, Himeji-shi, Hyogo 672-8076 (JP)
(74) Representative: Hasegawa, Kan
(86) International application number: PCT/JP2025/001205
(87) International publication number: WO 2025/164335

(57) **Abstract**

A method for producing water-absorbent resin particles includes preparing an aqueous solution containing a water-soluble ethylenically unsaturated monomer, water, and a radical polymerization initiator, forming a reaction liquid containing the aqueous solution, a dispersion medium, and a dispersion stabilizer in a polymerization tank, introducing an inert gas into the polymerization tank, forming a polymer of the water-soluble ethylenically unsaturated monomer by reverse phase suspension polymerization in the reaction liquid, and obtaining polymer particles containing the polymer from the reaction liquid. A temperature of the reaction liquid when the introduction of the inert gas into the polymerization tank is started is 47°C or higher and 70°C or lower.

## Description

### Technical Field

The present disclosure relates to a method for producing water-absorbent resin particles.

### Background Art

Water-absorbent resin particles are produced by various polymerization methods such as reverse phase suspension polymerization and aqueous solution polymerization. Products of the water-absorbent resin particles are widely used in various fields, for example, sanitary materials such as disposable diapers and sanitary products, horticultural materials such as water-retaining agents and soil improvers, and industrial materials such as water-stopping materials and condensation inhibitors. In these applications, it is generally required that the proportion of coarse particles in the water-absorbent resin particles is small (for example, Patent Literature 1).

### Citation List

### Patent Literature

[Patent Literature 1] International Publication No. WO 2012/081355

### Summary of Invention

### Technical Problem

The present disclosure relates to reducing the proportion of coarse particles in the water-absorbent resin particles to be obtained in a method for producing water-absorbent resin particles by reverse phase suspension polymerization.

### Solution to Problem

The present disclosure includes the followings.
[1] A method for producing water-absorbent resin particles, including: preparing an aqueous solution containing a water-soluble ethylenically unsaturated monomer, water, and a radical polymerization initiator; forming a reaction liquid containing the aqueous solution, a dispersion medium, and a dispersion stabilizer in a polymerization tank; introducing an inert gas into the polymerization tank; forming a polymer of the water-soluble ethylenically unsaturated monomer by reverse phase suspension polymerization in the reaction liquid; and obtaining polymer particles containing the polymer from the reaction liquid, in which a temperature of the reaction liquid when the introduction of the inert gas into the polymerization tank is started is 47°C or higher and 70°C or lower.
[2] The method according to [1], in which a 10-hour half-life temperature of the radical polymerization initiator is 40°C or higher and 80°C or lower.

### Advantageous Effects of Invention

According to the method for producing water-absorbent resin particles by reverse phase suspension polymerization, it is possible to reduce the proportion of coarse particles in the water-absorbent resin particles to be obtained.

### Brief Description of Drawings

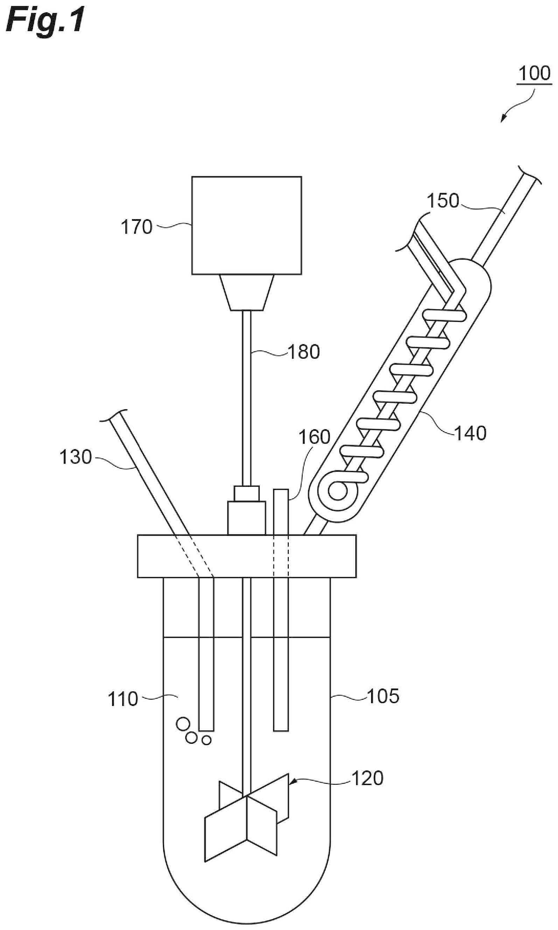

FIG. 1 is a schematic view showing an example of a reaction apparatus for reverse phase suspension polymerization.

### Description of Embodiments

The present invention is not limited to the following examples. In the present specification, (meth)acrylic acid means acrylic acid, methacrylic acid, and a combination thereof.

An example of a method for producing water-absorbent resin particles includes preparing an aqueous solution containing a water-soluble ethylenically unsaturated monomer, water, and a radical polymerization initiator, forming a reaction liquid containing the aqueous solution, a dispersion medium, and a dispersion stabilizer in a polymerization tank, introducing an inert gas into the polymerization tank, forming a polymer of the water-soluble ethylenically unsaturated monomer by reverse phase suspension polymerization in the reaction liquid, and obtaining polymer particles containing the polymer from the reaction liquid.

The reaction liquid can be formed, for example, by a method including stirring a mixed liquid containing an aqueous solution and an oily liquid containing a dispersion medium in a polymerization tank. Before the introduction of the inert gas into the polymerization tank is started, a reaction liquid, which is a suspension in which a particulate aqueous solution is dispersed in an oily liquid containing a dispersion medium, is usually formed. The reaction liquid may be formed in the polymerization tank in an air atmosphere. The polymerization tank is a container having a reaction chamber that can accommodate a reaction liquid and enables introduction of an inert gas into the polymerization tank, and the shape, size, and the like thereof can be appropriately selected.

A temperature of the reaction liquid when the introduction of the inert gas into the polymerization tank is started is 47°C or higher and 70°C or lower. It is considered that, when the temperature of the reaction liquid when the introduction of the inert gas into the polymerization tank is started is in the above-described range, reverse phase suspension polymerization proceeds readily in a state where the dispersion of the aqueous solution in the reaction liquid is stabilized, and thus water-absorbent resin particles having a small proportion of coarse particles can be stably produced. For example, the proportion of coarse particles having a particle diameter of 850 µm or greater can be reduced. From the same viewpoint, the temperature of the reaction liquid when the introduction of the inert gas is started may be 48°C or higher and 70°C or lower, 49°C or higher and 70°C or lower, 47°C or higher and 68°C or lower, 48°C or higher and 68°C or lower, 49°C or higher and 68°C or lower, 47°C or higher and 66°C or lower, 48°C or higher and 66°C or lower, 49°C or higher and 66°C or lower, 47°C or higher and 65°C or lower, 48°C or higher and 65°C or lower, 49°C or higher and 65°C or lower, 47°C or higher and 64°C or lower, 48°C or higher and 64°C or lower, or 49°C or higher and 64°C or lower.

By introducing the inert gas into the polymerization tank or the reaction chamber thereof, at least a part of dissolved oxygen in the reaction liquid is replaced with the inert gas, and thus reverse phase suspension polymerization proceeds readily. In order to introduce the inert gas into the polymerization tank, the inert gas may be introduced into a gas phase portion in the polymerization tank or into the reaction liquid. In this case, the expression "when the introduction of the inert gas into the polymerization tank is started" refers to the time when the inert gas is started to be introduced into the gas phase portion in the polymerization tank or into the reaction liquid. From the viewpoint of efficient replacement of dissolved oxygen in the reaction liquid, the inert gas may be introduced into the reaction liquid. The inert gas may be introduced while the reaction liquid is stirred. Examples of a method of introducing the inert gas into the reaction liquid include a method of blowing the inert gas into the reaction liquid from a gas introduction tube inserted into the reaction liquid, a method of blowing the inert gas into the reaction liquid from a hole provided in the polymerization tank, and a method of decompressing and degassing the inside of the polymerization tank containing the reaction liquid and then introducing the inert gas into the reaction liquid. Examples of a method of introducing the inert gas into the gas phase portion in the polymerization tank include a method of blowing the inert gas into the gas phase portion from a gas introduction tube inserted into the gas phase portion in the polymerization tank, and a method of decompressing and degassing the inside of the polymerization tank containing the reaction liquid and then introducing the inert gas into the gas phase portion.

The temperature of the reaction liquid before the inert gas is introduced may be lowered from a temperature higher than 70°C to 47°C or higher and 70°C or lower. The temperature of the reaction liquid before the inert gas is introduced may be raised from a temperature lower than 47°C to 47°C or higher and 70°C or lower. In order to adjust the temperature of the reaction liquid, the polymerization tank containing the reaction liquid may be heated or cooled by a water bath, a jacket provided around the polymerization tank, or the like. During the polymerization reaction of the water-soluble ethylenically unsaturated monomer by reverse phase suspension polymerization, the heating or cooling of the polymerization tank containing the reaction liquid may be maintained. During the polymerization reaction of the water-soluble ethylenically unsaturated monomer by reverse phase suspension polymerization, the temperature of the reaction liquid may be in a range of 47°C or higher and 90°C or lower.

FIG. 1 is a schematic view showing an example of a reaction apparatus for reverse phase suspension polymerization. A reaction apparatus 100 shown in FIG. 1 includes a polymerization tank 105 (round-bottomed cylindrical separable flask), a stirrer 170, a stirring shaft 180, stirring blades 120 (four inclined paddle blades), a gas introduction tube 130, a reflux condenser 140, and a thermometer 160. A reaction liquid 110 is formed in the polymerization tank 105. The stirring shaft 180 is mounted on the stirrer 170, and the stirring blades 120 are provided at a tip of the stirring shaft 180. The gas introduction tube 130, the stirring blades 120, and the thermometer 160 are inserted into the reaction liquid 110. The reflux condenser 140 has a gas discharge tube 150 and is mounted on the polymerization tank 105. By blowing the inert gas from the gas introduction tube 130 into the reaction liquid 110, at least a part of dissolved oxygen in the reaction liquid 110 is replaced with the inert gas.

The inert gas may include, for example, one or more selected from noble gases, nitrogen gas, and carbon dioxide gas. Examples of the noble gas include helium, neon, argon, and krypton. From the viewpoints of industrial availability and economy, the inert gas may include nitrogen gas.

During the polymerization reaction, the reaction liquid is usually stirred. The rotation speed of the stirring during the polymerization reaction may be, for example, 10 rpm or greater and 1000 rpm or less, or 200 rpm or greater and 1000 rpm or less. The time of the polymerization reaction may be, for example, 10 minutes or longer and 240 minutes or shorter.

The radical polymerization initiator contained in the aqueous solution may include, for example, an azo-based compound, a peroxide, or a combination thereof.

Examples of the azo-based compound include 2,2'-azobis[2-(N-phenylamidino)propane]dihydrochloride, 2,2'-azobis{2-[N-(4-chlorophenyl)amidino]propane}dihydrochloride, 2,2'-azobis{2-[N-(4-hydroxyphenyl)amidino]propane}dihydrochloride, 2,2'-azobis[2-(N-benzylamidino)propane]dihydrochloride, 2,2'-azobis[2-(N-allylamidino)propane]dihydrochloride, 2,2'-azobis(2-methylpropionamidine)dihydrochloride, 2,2'-azobis{2-[N-(2-hydroxyethyl)amidino]propane}dihydrochloride, 2,2'-azobis[2-(5-methyl-2-imidazolin-2-yl)propane]dihydrochloride, 2,2'-azobis[2-(2-imidazolin-2-yl)propane]dihydrochloride, 2,2'-azobis[2-(4,5,6,7-tetrahydro-1H-1,3-diazepin-2-yl)propane]dihydrochloride, 2,2'-azobis[2-(5-hydroxy-3,4,5,6-tetrahydropyrimidin-2-yl)propane] dihydrochloride, 2,2'-azobis{2-[1-(2-hydroxyethyl)-2-imidazolin-2-yl]propane}dihydrochloride, 2,2'-azobis(2-methylpropionamide)dihydrochloride, 2,2'-azobis[2-(2-imidazolin-2-yl)propane]disulfate dihydrate, 2,2'-azobis[N-(2-carboxyethyl)-2-methylpropionamidine]tetrahydrate, and 2,2'-azobis[2-methyl-N-(2-hydroxyethyl)propionamide].

Examples of the peroxide include persulfates such as potassium persulfate, ammonium persulfate, and sodium persulfate; organic peroxides such as methyl ethyl ketone peroxide, methyl isobutyl ketone peroxide, di-t-butyl peroxide, t-butyl cumyl peroxide, t-butyl peroxyacetate, t-butyl peroxyisobutyrate, and t-butyl peroxypivalate; and hydrogen peroxide.

The 10-hour half-life temperature of the radical polymerization initiator contained in the aqueous solution may be 40°C or higher and 80°C or lower. In a case where the 10-hour half-life temperature of the radical polymerization initiator is in the above-described range, the polymerization reaction tends to proceed efficiently in a case where the introduction of the inert gas is started at a temperature of 47°C or higher and 70°C or lower. From the same viewpoint, the 10-hour half-life temperature of the radical polymerization initiator may be 45°C or higher and 80°C or lower, 50°C or higher and 80°C or lower, 40°C or higher and 75°C or lower, 45°C or higher and 75°C or lower, 50°C or higher and 75°C or lower, 40°C or higher and 70°C or lower, 45°C or higher and 70°C or lower, or 50°C or higher and 70°C or lower.

The radical polymerization initiator having a 10-hour half-life temperature of 40°C or higher and 80°C or lower may include one or more compounds selected from 2,2'-azobis(2-methylpropionamidine)dihydrochloride, 2,2'-azobis[2-(2-imidazolin-2-yl)propane]dihydrochloride, potassium persulfate, ammonium persulfate, and sodium persulfate.

The amount of the radical polymerization initiator may be, for example, 0.0001 mol or greater and 1 mol or less, 0.001 mol or greater and 0.1 mol or less, 0.005 mol or greater and 0.08 mol or less, or 0.01 mol or greater and 0.05 mol or less with respect to 100 mol of the water-soluble ethylenically unsaturated monomer.

The water-soluble ethylenically unsaturated monomer may include, for example, at least one selected from the group consisting of (meth)acrylic acid and a salt thereof, 2-(meth)acrylamide-2-methylpropanesulfonic acid and a salt thereof, (meth)acrylamide, N,N-dimethyl (meth)acrylamide, 2-hydroxyethyl (meth)acrylate, N-methylol (meth)acrylamide, polyethylene glycol mono(meth)acrylate, N,N-diethylaminoethyl (meth)acrylate, N,N-diethylaminopropyl (meth)acrylate, and diethylaminopropyl (meth)acrylamide. The salts of (meth)acrylic acid and 2-(meth)acrylamide-2-methylpropanesulfonic acid may be, for example, alkali metal salts. The alkali metal salts of (meth)acrylic acid and 2-(meth)acrylamide-2-methylpropanesulfonic acid may be, for example, sodium salts.

The water-soluble ethylenically unsaturated monomer may include (meth)acrylic acid and an alkali metal salt of (meth)acrylic acid. In this case, the total proportion of (meth)acrylic acid and the alkali metal salt thereof in the total amount of the water-soluble ethylenically unsaturated monomer may be 60 mol% or greater, 70 mol% or greater, 80 mol% or greater, 90 mol% or greater, or 95 mol% or greater, and may be substantially 100 mol%.

The aqueous solution may include an internal crosslinking agent that crosslinks the polymer of the water-soluble ethylenically unsaturated monomer to be formed by the polymerization reaction. The internal crosslinking agent may be a compound containing two or more reactive functional groups having reactivity with the water-soluble ethylenically unsaturated monomer. The reactive functional group can be, for example, a (meth)acryloyl group, a vinyl group, an epoxy group, a halogeno group in a haloepoxy compound, an isocyanate group, or a combination thereof.

Examples of the internal crosslinking agent containing two or more (meth)acryloyl groups include a (meth)acrylic acid ester compound formed of a polyol compound and (meth)acrylic acid, an unsaturated polyester formed of a polyol compound and an unsaturated carboxylic acid (maleic acid, fumaric acid, or the like), a bis(meth)acrylamide compound (N,N'-methylene bis(meth)acrylamide or the like), a (meth)acrylic acid ester compound formed of a polyepoxide compound and (meth)acrylic acid, and a (meth)acrylic acid carbamyl ester compound formed of a polyisocyanate compound (tolylene diisocyanate, hexamethylene diisocyanate, or the like) and hydroxyethyl (meth)acrylate. The polyol compound for forming the (meth)acrylic acid ester compound or the unsaturated polyester may be, for example, ethylene glycol, propylene glycol, trimethylolpropane, glycerin, polyoxyethylene glycol, polyoxypropylene glycol, polyglycerin, or a combination thereof.

The vinyl group as the reactive functional group may be a part of an allyl group. Examples of the internal crosslinking agent containing two or more vinyl groups (or allyl groups) include allylated starch, allylated cellulose, diallyl phthalate, N,N',N''-triallyl isocyanurate, and divinylbenzene.

Examples of the internal crosslinking agent containing two or more epoxy groups include (poly)ethylene glycol diglycidyl ether, (poly)propylene glycol diglycidyl ether, (poly)glycerin diglycidyl ether, (poly)glycerin triglycidyl ether, (poly)propylene glycol polyglycidyl ether, and polyglycerol polyglycidyl ether.

Examples of the internal crosslinking agent containing two or more isocyanate groups include 2,4-tolylene diisocyanate and hexamethylene diisocyanate.

The amount of the internal crosslinking agent may be 0 mmol or greater and 0.5 mmol or less, 0 mmol or greater and 0.2 mmol or less, 0 mmol or greater and 0.1 mmol or less, 0 mmol or greater and 0.05 mmol or less, or 0 mmol or greater and 0.02 mmol or less with respect to 1 mol of the water-soluble ethylenically unsaturated monomer.

The aqueous solution may contain a thickener, a hydrophilic polymer dispersant, a chain transfer agent, a foaming agent, or a combination thereof as other components.

Examples of the thickener include hydroxyalkyl cellulose such as hydroxyethyl cellulose (HEC) and hydroxypropyl cellulose (HPC); hydroxyalkyl alkyl cellulose such as hydroxyethyl methyl cellulose, hydroxypropyl methyl cellulose, and hydroxyethyl ethyl cellulose; carboxyalkyl cellulose such as carboxymethyl cellulose; and carboxyalkyl hydroxyalkyl cellulose such as carboxymethyl hydroxyethyl cellulose. The thickener may be used alone or in combination with two or more kinds thereof.

The amount of the thickener may be 0.05 parts by mass or greater and 20 parts by mass or less, 0.2 parts by mass or greater and 10 parts by mass or less, or 0.4 parts by mass or greater and 5 parts by mass or less with respect to 100 parts by mass of the water-soluble ethylenically unsaturated monomer.

Examples of the hydrophilic polymer dispersant include polyvinyl alcohol (PVA), polyvinylpyrrolidone (PVP), polyethylene glycol (PEG), polypropylene glycol, a polyethylene glycol-polypropylene glycol block copolymer, polyglycerin, polyoxyethylene glycerin, polyoxypropylene glycerin, a polyoxyethylene-polyoxypropylene glycerin copolymer, and a polyoxyethylene sorbitan fatty acid ester. The hydrophilic polymer dispersant may be used alone or in combination with two or more kinds thereof.

The amount of the hydrophilic polymer dispersant may be 0.001 parts by mass or greater and 10 parts by mass or less, 0.005 parts by mass or greater and 5 parts by mass or less, 0.01 parts by mass or greater and 3 parts by mass or less, or 0.01 parts by mass or greater and 1.5 parts by mass or less with respect to 100 parts by mass of the water-soluble ethylenically unsaturated monomer.

Examples of the chain transfer agent include hypophosphites, thiols, thiol acids, secondary alcohols, and amines.

Examples of the foaming agent include inorganic foaming agents such as ammonium carbonate, sodium bicarbonate, and ammonium bicarbonate, and organic foaming agents, for example, nitroso compounds such as dinitrosopentamethylenetetramine, azo compounds such as azodicarbonamide and azobisisobutyronitrile, and sulfonyl hydrazide compounds such as 4,4'-oxybisbenzenesulfonyl hydrazide and p-toluenesulfonyl hydrazide.

The dispersion stabilizer in the reaction liquid is a component for stabilizing the dispersion of the aqueous solution in a reverse phase suspension, and is usually contained in the oily liquid. The dispersion stabilizer may be dissolved in a dispersion medium of the oily liquid. The dispersion stabilizer may include a surfactant, a hydrophobic polymer dispersant, or a combination thereof.

The surfactant may be a nonionic surfactant, an anionic surfactant, or a combination thereof. The HLB of the surfactant may be 1 or greater and 16 or less, 2 or greater and 12 or less, or 3 or greater and 10.5 or less. The surfactant may be used alone or in combination with two or more kinds thereof.

Examples of the nonionic surfactant include sorbitan fatty acid esters, polyglycerin fatty acid esters, sucrose fatty acid esters, polyoxyethylene sorbitan fatty acid esters, polyoxyethylene glycerin fatty acid esters, sorbitol fatty acid esters, polyoxyethylene sorbitol fatty acid esters, polyoxyethylene alkyl ethers, polyoxyethylene alkylphenyl ethers, polyoxyethylene castor oil, polyoxyethylene hydrogenated castor oil, alkylallyl formaldehyde condensed polyoxyethylene ethers, polyoxyethylene polyoxypropylene block copolymers, polyoxyethylene polyoxypropyl alkyl ethers, and polyethylene glycol fatty acid esters. Examples of the anionic surfactant include fatty acid salts, alkylbenzene sulfonates, alkylmethyl taurates, polyoxyethylene alkylphenyl ether sulfuric acid ester salts, polyoxyethylene alkyl ether sulfonic acid salts, phosphoric acid esters of polyoxyethylene alkyl ethers, and phosphoric acid esters of polyoxyethylene alkyl allyl ethers.

The surfactant may include one or more selected from sorbitan fatty acid esters, polyglycerin fatty acid esters, and sucrose fatty acid esters. These surfactants can further reduce the proportion of coarse particles in the water-absorbent resin particles.

The amount of the surfactant may be 0.05 parts by mass or greater and 10 parts by mass or less, 0.08 parts by mass or greater and 5 parts by mass or less, or 0.1 parts by mass or greater and 3 parts by mass or less with respect to 100 parts by mass of the water-soluble ethylenically unsaturated monomer.

The hydrophobic polymer dispersant to be introduced into the reaction liquid may be dissolved in the dispersion medium of the oily liquid. Examples of the hydrophobic polymer dispersant include maleic anhydride-modified polyethylene, maleic anhydride-modified polypropylene, a maleic anhydride-modified ethylene-propylene copolymer, a maleic anhydride-modified ethylene propylene diene terpolymer (EPDM), maleic anhydride-modified polybutadiene, a maleic anhydride-ethylene copolymer, a maleic anhydride-propylene copolymer, a maleic anhydride-ethylene-propylene copolymer, a maleic anhydride-butadiene copolymer, polyethylene, polypropylene, an ethylene-propylene copolymer, oxidized polyethylene, oxidized polypropylene, an oxidized ethylene-propylene copolymer, an ethylene-acrylic acid copolymer, ethyl cellulose, and ethyl hydroxyethyl cellulose. The hydrophobic polymer dispersant may be used alone or in combination with two or more kinds thereof.

The amount of the hydrophobic polymer dispersant may be 0.05 parts by mass or greater and 10 parts by mass or less, 0.08 parts by mass or greater and 5 parts by mass or less, or 0.1 parts by mass or greater and 3 parts by mass or less with respect to 100 parts by mass of the water-soluble ethylenically unsaturated monomer.

The amount of the dispersion stabilizer in the reaction liquid, or the total amount of the surfactant and the hydrophobic polymer dispersant may be 0.1 parts by mass or greater and 30 parts by mass or less with respect to 100 parts by mass of the water-soluble ethylenically unsaturated monomer.

The dispersion medium may be a hydrocarbon. Examples of the hydrocarbon that can be used as the dispersion medium include chain aliphatic hydrocarbons such as n-hexane, n-heptane, 2-methylhexane, 3-methylhexane, 2,3-dimethylpentane, 3-ethylpentane, and n-octane; alicyclic hydrocarbons such as cyclohexane, methylcyclohexane, cyclopentane, methylcyclopentane, trans-1,2-dimethylcyclopentane, cis-1,3-dimethylcyclopentane, and trans-1,3-dimethylcyclopentane; and aromatic hydrocarbons such as benzene, toluene, and xylene. The hydrocarbon may be used alone or in combination with two or more kinds thereof.

The amount of the dispersion medium may be 30 parts by mass or greater and 1000 parts by mass or less, 50 parts by mass or greater and 650 parts by mass or less, 70 parts by mass or greater and 550 parts by mass or less, or 100 parts by mass or greater and 450 parts by mass or less with respect to 100 parts by mass of the water-soluble ethylenically unsaturated monomer.

As the polymerization reaction proceeds, a particulate hydrogel polymer containing the polymer is usually formed in the reaction liquid. The polymer particles containing the polymer can be obtained as the water-absorbent resin particles from the reaction liquid containing the hydrogel polymer. Obtaining polymer particles from the reaction liquid" includes, for example, forming a concentrate by extracting a part of water from the reaction liquid by azeotropic distillation of the dispersion medium and water, and evaporating the dispersion medium and water from the concentrate. After the removal by evaporation of the dispersion medium and water, a powder of the dried polymer particles can be obtained. A certain amount of water may remain in the dried polymer particles.

After a part of water is extracted from the reaction liquid by azeotropic distillation of the dispersion medium and water, the polymer particles may be surface-crosslinked in a mixture that contains the concentrate containing the polymer particles containing the polymer and a surface crosslinking agent. Various additives may be further added to the dried polymer particles. Examples of the additives include a lubricant (for example, silica particles), a metal chelating agent, a surface modifier, a heat-resistant stabilizer, an antioxidant, and an antibacterial agent. In the present specification, the water-absorbent resin particles mean particles including the polymer particles. The water-absorbent resin particles may include the polymer particles and the additives. The amount of the additive (for example, a lubricant) may be, for example, 0.001 parts by mass or greater and 10 parts by mass or less, 0.01 parts by mass or greater and 5 parts by mass or less, or 0.1 parts by mass or greater and 2 parts by mass or less with respect to 100 parts by mass of the polymer particles.

The proportion of particles having a particle diameter of 850 µm or greater in the powder of the dried polymer particles (water-absorbent resin particles) may be 4% by mass or less, 3% by mass or less, 2% by mass or less, or 1% by mass or less with respect to the total amount of the water-absorbent resin particles. The proportion as mentioned here means a proportion after drying and before the powder is classified by sieving or the like. A method for determining the proportion of the particles having a particle diameter of 850 µm or greater includes sieving the powder having a mass W₀ g of the water-absorbent resin particles through a sieve having an opening of 850 µm, measuring a mass W₁ g of the particles remaining on the sieve, and calculating the proportion of the particles having a particle diameter of 850 µm or greater using Equation: proportion of particles having particle diameter of 850 µm or greater = (W₁/W₀) × 100. The particles having a particle diameter of 850 µm or greater may be excluded from a product by classification. It is advantageous that the proportion of particles having a particle diameter of 850 µm or greater in the powder before the classification and after the polymerization is small from the viewpoint of effective utilization of raw materials such as (meth)acrylic acid.

The median particle diameter of the water-absorbent resin particles may be, for example, 50 µm or greater and 850 µm or less. The median particle diameter of the water-absorbent resin particles may be 50 µm or greater and 800 µm or less, 600 µm or less, 500 µm or less, 400 µm or less, 350 µm or less, 300 µm or less, 250 µm or less, or 200 µm or less. The median particle diameter of the water-absorbent resin particles can be measured using a JIS standard sieve as described in examples below.

### [Examples]

The present invention is not limited to the following Examples.

### 1. Production of water-absorbent resin particles

### Example 1

A round-bottomed cylindrical separable flask with an inner diameter of 11 cm and an internal volume of 2 L equipped with a reflux condenser, a dropping funnel, a gas introduction tube, and a stirrer was prepared. Stirring blades having four inclined paddle blades with a blade diameter of 5 cm in two stages were attached to the stirrer. 283 g of n-heptane as a hydrocarbon dispersion medium and 0.736 g of a maleic anhydride-modified ethylene-propylene copolymer (Hi-WAX 1105A, Mitsui Chemicals, Inc.) as a hydrophobic polymer dispersant were placed in the prepared separable flask. The temperature of the mixture in the separable flask was raised to 80°C while stirring, thereby forming an n-heptane solution containing the maleic anhydride-modified ethylene-propylene copolymer. After the completion of stirring, the n-heptane solution was cooled to 56°C.

74.06 g (1.03 mol) of acrylic acid was placed in a beaker having an internal volume of 300 mL. While cooling the beaker with ice water, 102.8 g of a sodium hydroxide aqueous solution having a concentration of 30% by mass was added dropwise to the acrylic acid to prepare a 75 mol% neutralized product of the acrylic acid. Next, 69.0 g of water, 0.0552 g (0.204 mmol) of 2,2'-azobis(2-methylpropionamidine)dihydrochloride as a radical polymerization initiator, and 0.0102 g (0.059 mmol) of ethylene glycol diglycidyl ether as an internal crosslinking agent were added to the beaker to prepare an aqueous solution containing the acrylic acid and a sodium acrylate.

The prepared aqueous solution was added to the n-heptane solution containing the maleic anhydride-modified ethylene-propylene copolymer in the separable flask. The mixed liquid in the separable flask was stirred for 10 minutes. Next, a surfactant solution containing 0.736 g of sucrose stearic acid ester (RYOTO Sugar Ester S-370, Mitsubishi-Chemical Foods Corporation, surfactant, HLB: 3) and 6.62 g of n-heptane was added to the mixed liquid. The separable flask was immersed in a water bath at 50°C, and the reaction liquid formed in the separable flask was stirred with the stirrer at a rotation speed of 300 rpm. After the temperature of the reaction liquid was stabilized at 49°C, the introduction of nitrogen gas was started by blowing nitrogen gas as the inert gas into the reaction liquid from the gas introduction tube inserted therein while maintaining the stirring, as shown in FIG. 1. As the inside of the separable flask was sufficiently replaced with nitrogen gas by the introduction of nitrogen gas, a polymerization reaction of the acrylic acid and the sodium acrylate was started. The polymerization reaction was allowed to proceed for 90 minutes while maintaining the stirring from the start of the introduction of nitrogen gas, thereby forming a slurry containing the particulate hydrogel polymer.

The separable flask containing the slurry was removed from the water bath at 50°C and immersed in an oil bath at 125°C. While refluxing n-heptane contained in the slurry in the separable flask, 127.4 g of water contained in the slurry was removed from the separable flask by azeotropic distillation of n-heptane and water. Next, the separable flask was heated in the oil bath at 125°C to evaporate the n-heptane, to obtain 92.5 g of the dried polymer particles as the water-absorbent resin particles.

### Example 2

Water-absorbent resin particles of Example 2 were obtained under the same conditions as in Example 1 except that the separable flask containing the reaction liquid was immersed in a water bath at 55°C, and the introduction of nitrogen gas was started in a state where the temperature of the reaction liquid was stabilized at 54°C.

### Example 3

Water-absorbent resin particles of Example 3 were obtained under the same conditions as in Example 1 except that the separable flask containing the reaction liquid was immersed in a water bath at 60°C, and the introduction of nitrogen gas was started in a state where the temperature of the reaction liquid was stabilized at 58°C.

### Example 4

Water-absorbent resin particles of Example 4 were obtained under the same conditions as in Example 1 except that the separable flask containing the reaction liquid was immersed in a water bath at 65°C, and the introduction of nitrogen gas was started in a state where the temperature of the reaction liquid was stabilized at 63°C.

### Example 5

Water-absorbent resin particles of Example 5 were obtained under the same conditions as in Example 1 except that the amount of 2,2'-azobis(2-methylpropionamidine)dihydrochloride was changed to 0.1104 g (0.407 mmol), and that the separable flask containing the reaction liquid was immersed in a water bath at 60°C, and the introduction of nitrogen gas was started in a state where the temperature of the reaction liquid was stabilized at 59°C.

### Example 6

Water-absorbent resin particles of Example 6 were obtained under the same conditions as in Example 1 except that the radical polymerization initiator was changed to 0.0368 g (0.136 mmol) of potassium persulfate, and the separable flask containing the reaction liquid was immersed in a water bath at 65°C, and the introduction of nitrogen gas was started in a state where the temperature of the reaction liquid was stabilized at 64°C.

### Example 7

Water-absorbent resin particles of Example 7 were obtained under the same conditions as in Example 6 except that the amount of potassium persulfate was changed to 0.0736 g (0.272 mmol).

### Comparative Example 1

Water-absorbent resin particles of Comparative Example 1 were obtained under the same conditions as in Example 1 except that the separable flask containing the reaction liquid was immersed in a water bath at 45°C, and the introduction of nitrogen gas was started in a state where the temperature of the reaction liquid was stabilized at 44°C.

### 2. Evaluation of water-absorbent resin particles

### (1) Proportion of particles having particle diameter of 850 µm or greater

The proportion of particles having a particle diameter of 850 µm or greater was measured in an environment of room temperature (25 ± 2°C) and a humidity of 50 ± 10% by the following procedure. First, the powder of the water-absorbent resin particles obtained in the Examples or the Comparative Example was sieved through a sieve having an opening of 850 µm. The mass of the water-absorbent resin particles having a particle diameter of 850 µm or greater remaining on the sieve was measured, and the proportion (% by mass) of the particles having a particle diameter of 850 µm or greater with respect to the total amount of the water-absorbent resin particles was calculated.

### (2) Median particle diameter

The median particle diameter was measured in an environment of room temperature (25 ± 2°C) and a humidity of 50 ± 10% by the following procedure. First, JIS standard sieves were stacked in order of a sieve having an opening of 500 µm, a sieve having an opening of 425 µm, a sieve having an opening of 250 µm, a sieve having an opening of 180 µm, a sieve having an opening of 150 µm, a sieve having an opening of 106 µm, a sieve having an opening of 75 µm, and a tray from the top. 5 g of the water-absorbent resin particles that had passed through the sieve having an opening of 850 µm was placed in the sieve at the top, and the water-absorbent resin particles were classified by shaking for 5 minutes using a continuous fully automatic sonic vibration sieving analyzer (Robot Shifter RPS-02, manufactured by Seishin Enterprise Co., Ltd.). After the classification, the proportion (mass percentage) of the water-absorbent resin particles remaining on each sieve with respect to the total amount of the water-absorbent resin particles was calculated. The relationship between the opening of the sieve and the cumulative value of the proportion of the water-absorbent resin particles remaining on the sieve was plotted on logarithmic probability paper by accumulating from the ratio of the fraction with a larger particle diameter. The plotted points on the probability paper were connected with straight lines, and the particle diameter corresponding to a cumulative mass percentage of 50% by mass was determined, and the value was defined as the median particle diameter.

The evaluation results are listed in Table 1. The amount of the radical polymerization initiator listed in Table 1 is the proportion (mol%) with respect to the amount of the monomer. The types of the radical polymerization initiators listed in Table 1 are as follows.
(i) 2,2'-Azobis(2-methylpropionamidine)dihydrochloride
(ii) Potassium persulfate

**[Table 1]**

| | Radical polymerization initiator | | Temperature of reaction liquid when introduction of inert gas is started [°C] | Median particle diameter [µm] | Proportion of particles having particle diameter of 850 µm or greater [%] |
|---|---|---|---|---|---|
| | Type | Amount [mol%] | | | |
| Comp. Ex. 1 | (i) | 0.020 | 44 | 248 | 4.1 |
| Ex. 1 | (i) | 0.020 | 49 | 141 | 0.2 |
| Ex. 2 | (i) | 0.020 | 54 | 128 | 0.2 |
| Ex. 3 | (i) | 0.020 | 58 | 172 | 0.6 |
| Ex. 4 | (i) | 0.020 | 63 | 167 | 0.6 |
| Ex. 5 | (i) | 0.040 | 59 | 164 | 0.5 |
| Ex. 6 | (ii) | 0.013 | 64 | 142 | 0.1 |
| Ex. 7 | (ii) | 0.026 | 64 | 153 | 0.2 |

As listed in Table 1, it was confirmed that, in a case where the temperature of the reaction liquid when the introduction of the inert gas was started was 47°C or higher and 70°C or lower, the proportion of particles having a particle diameter of 850 µm or greater in the obtained water-absorbent resin particles was reduced.

### Reference Signs List

100: reaction apparatus
105: polymerization tank (separable flask)
110: reaction liquid
120: stirring blades
130: gas introduction tube
140: reflux condenser
150: gas discharge tube
160: thermometer
170: stirrer
180: stirring shaft

## Claims

1. A method for producing water-absorbent resin particles, comprising:
preparing an aqueous solution comprising a water-soluble ethylenically unsaturated monomer, water, and a radical polymerization initiator;
forming a reaction liquid comprising the aqueous solution, a dispersion medium, and a dispersion stabilizer in a polymerization tank;
introducing an inert gas into the polymerization tank;
forming a polymer of the water-soluble ethylenically unsaturated monomer by reverse phase suspension polymerization in the reaction liquid; and
obtaining polymer particles comprising the polymer from the reaction liquid,
wherein a temperature of the reaction liquid when the introduction of the inert gas into the polymerization tank is started is 47°C or higher and 70°C or lower.

2. The method according to Claim 1,
wherein a 10-hour half-life temperature of the radical polymerization initiator is 40°C or higher and 80°C or lower.
